(19) Europäisches Patentamt
European Patent Office
Office européen des brevets

(11) **EP 4 369 139 A1**

(12) **EUROPEAN PATENT APPLICATION**

(43) Date of publication:
**15.05.2024  Bulletin 2024/20**

(21) Application number: **23205820.6**

(22) Date of filing: **25.10.2023**

(51) International Patent Classification (IPC):
**G05D 1/606** $^{(2024.01)}$

(52) Cooperative Patent Classification (CPC):
**G05D 1/606; B63H 25/00;** G05D 2107/27;
G05D 2109/34; G05D 2111/52; G05D 2111/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2022   JP 2022170897**

(71) Applicants:
• **Nabtesco Corporation**
**Tokyo 102-0093 (JP)**
• **Tokyo Keiki Inc.**
**Tokyo 144-8551 (JP)**

(72) Inventors:
• **Kawatani, Toru**
**Tokyo, 102-0093 (JP)**
• **Tanaka, Hiroki**
**Tokyo, 102-0093 (JP)**
• **Sakakibara, Takatsugu**
**Tokyo, 102-0093 (JP)**
• **Kawasaki, Naoyuki**
**Tokyo, 102-0093 (JP)**
• **Yamaguchi, Ryo**
**Tokyo, 144-8551 (JP)**
• **Uetake, Hironobu**
**Tokyo, 144-8551 (JP)**
• **Shimada, Naoki**
**Tokyo, 144-8551 (JP)**
• **Abe, Kenta**
**Tokyo, 144-8551 (JP)**

(74) Representative: **Grünecker Patent- und**
**Rechtsanwälte**
**PartG mbB**
**Leopoldstraße 4**
**80802 München (DE)**

(54) **SHIP CONTROL SYSTEM, CONTROL METHOD FOR SHIP CONTROL SYSTEM, CONTROL PROGRAM FOR SHIP CONTROL SYSTEM, AND EXTERNAL FORCE VECTOR ESTIMATION DEVICE**

(57)     A ship control system (100) of one embodiment including: a route command unit (50) outputs a route command (Es) including a target ship position and a target bow direction of a ship, an information detector (21) detects ship information (Js) including an actual ship position and an actual bow direction of a ship (1), an external force vector estimation unit (28) estimates an external force vector (Ve) received by a ship (1), using the ship information (Js) and a hull motion model related to a hull motion of the ship (1), and a control command unit (15) controls both rotational frequency of a main engine and a rudder angle of a ship (1), based on the route command (Es), the ship information (Js), and the external force vector (Ve).

FIG. 3

EP 4 369 139 A1

## FIG. 5A

## FIG. 5B

**Description**

TECHNICAL FIELD

The present invention relates to a ship control system, an external force vector estimation device, a control method for a ship control system, and a storage medium storing a control program for a ship control system.

BACKGROUND ART

For example, Patent Literature 1 describes a method for automatically steering a ship. This method periodically calculates the deviation between the actual position and the scheduled position of a ship and statistically processes the amount of deviation obtained over time to estimate an external force acting on the ship. In this method, based on the external force, the actual position, and the target position on the scheduled route, the next steering command for the ship is calculated.

Patent Literature 1: Japanese Unexamined Patent Application Publication No. 58-082311

SUMMARY OF INVENTION

In the technology described in Patent Literature 1, since a correction is made after the positional deviation between the actual position and the scheduled position of a ship becomes large to some extent, the control error also becomes large. Also, since the influence of the external force vector is not taken into account, the control error due to the external force vector increases. When the control error is large, there arises a problem of increased fuel consumption for the correction therefor.

The present invention has been made in view of such an issue, and a purpose thereof is to provide a technology for a ship control system capable of reducing the influence of the external force vector.

SOLUTION TO PROBLEM

In response to the above issue, a ship control system according to one embodiment of the present invention includes: a route command unit that outputs a route command including a target ship position and a target bow direction of a ship; an information detector that detects ship information including an actual ship position and an actual bow direction of the ship; an external force vector estimation unit that estimates an external force vector received by the ship, using the ship information and a hull motion model related to a hull motion of the ship; and a control command unit that controls both rotational frequency of a main engine and a rudder angle of the ship, based on the route command, the ship information, and the external force vector.

Optional combinations of the above, and implementation of the present invention, including the constituting elements and expressions, in the form of methods, apparatuses, programs, transitory or non-transitory storage medium storing programs, or systems may also be practiced as additional modes of the present invention.

According to the present invention, it is possible to provide a technology for a ship control system capable of reducing the influence of the external force vector.

BRIEF DESCRIPTION OF DRAWINGS

Embodiments will now be described, by way of example only, with reference to the accompanying drawings which are meant to be exemplary, not limiting, and wherein like elements are numbered alike in several FIGURES, in which:

FIG. 1 schematically illustrates a ship to which a ship control system according to a first embodiment of the present invention is applied;

FIG. 2 is a schematic block diagram of the ship control system shown in FIG. 1;

FIG. 3 shows a flow of information in the ship control system shown in FIG. 1;

FIG. 4 is an operational block diagram that shows an operation of a hull motion model identification unit of an embodiment;

FIG. 5A is an illustrative diagram for an example of a turning moment generated by wind;

FIG. 5B is an illustrative diagram for an example of a turning moment generated by wind; and

FIG. 6 is a flowchart that shows a control method for the ship control system according to a second embodiment of the present invention.

DESCRIPTION OF EMBODIMENTS

In the embodiments disclosed in the present specification, when an object is constituted by multiple objects, the multiple objects may be integrated together, and, conversely, an object constituted by a single object may be divided into multiple objects. Regardless of whether the objects are integrated or not, configurations have only to be made such that a purpose of the invention can be achieved.

In the embodiments disclosed in the present specification, when multiple functions are provided in a distributed manner, some or all of the multiple functions may be collectively provided, and, conversely, when multiple functions are collectively provided, some or all of the multiple functions may be provided in a distributed manner. Regardless of whether the functions are aggregated or distributed, configurations have only to be made such that a purpose of the invention can be achieved.

Also, separate constituting elements having a feature in common may be distinguished from each other by adding "first, second" or the like at the beginnings of the names thereof, and such words may be omitted when the constituting elements are collectively referred to. Further, terms including ordinal numbers, such as "first" and "second", are used to describe various constituting elements. However, such terms are used only to distinguish one constituting element from another and do not limit the constituting elements.

A ship control system according to one embodiment includes: a route command unit that outputs a route command including a target ship position and a target bow direction of a ship; an information detector that detects ship information including an actual ship position and an actual bow direction of the ship; an external force vector estimation unit that estimates an external force vector received by the ship, using the ship information and a hull motion model related to a hull motion of the ship; and a control command unit that controls both rotational frequency of a main engine and a rudder angle of the ship, based on the route command, the ship information, and the external force vector.

With this configuration, since the ship is controlled using the external force vector, disturbance of the position or attitude of the ship caused by external forces can be suppressed by the control.

As an example, the external force vector estimation unit estimates the external force vector using a hull motion model in the state where no external force is applied. In this case, since the external force vector is estimated using a hull motion model in a state where there are few frequently changing external forces, such as wind and tidal currents, unnecessary fluctuations in the external force vector can be reduced.

As an example, the external force vector estimation unit estimates an external force vector using an actual ship speed and actual acceleration or deceleration in a longitudinal direction of the ship. In this case, the external force vector can be estimated using an external force acting in a longitudinal direction.

As an example, the external force vector estimation unit estimates an external force vector using an actual ship speed and actual acceleration or deceleration in a direction perpendicular to a longitudinal direction of the ship. In this case, the external force vector can be estimated using an external force acting in a transverse direction.

As an example, the external force vector is estimated using a measurement result of an external force received by the ship from at least one of wind or a tidal current. In this case, since an external force can be calculated based on the acquired measurement results of the tidal currents, wind speed, and wind direction, the external force vector can be estimated with high accuracy.

As an example, the external force vector estimation unit uses frequency analysis on the time-series data of the external force vector to separate at least one component of wind or a tidal current. In this case, control can be performed using a result obtained by multiplying a different coefficient for each separated component. Also, by separating the wind component, the influence of a turning moment due to wind can be grasped.

As an example, the external force vector estimation unit performs part or all of processing of generating or updating the hull motion model, using a device outside the ship via a communication means. In this case, the amount of information processing on the ship can be reduced, which is advantageous for cost reduction.

An external force vector estimation device according to one embodiment includes an external force vector estimation unit that estimates, using ship information including an actual ship position and an actual bow direction of a ship and a hull motion model related to a hull motion of the ship, an external force vector received by the ship.

With this configuration, since control can be performed using the external force vector, disturbance of the position or attitude of the ship caused by external forces can be suppressed by the control.

In the following, the present invention will be described based on preferred embodiments with reference to each drawing. In the embodiments and modifications, like reference characters denote like or corresponding constituting elements and members, and the repetitive description will be omitted as appropriate. Also, the dimensions of a member may be appropriately enlarged or reduced in each drawing in order to facilitate understanding. Further, in each drawing, part of a member less important in describing embodiments may be omitted.

First Embodiment

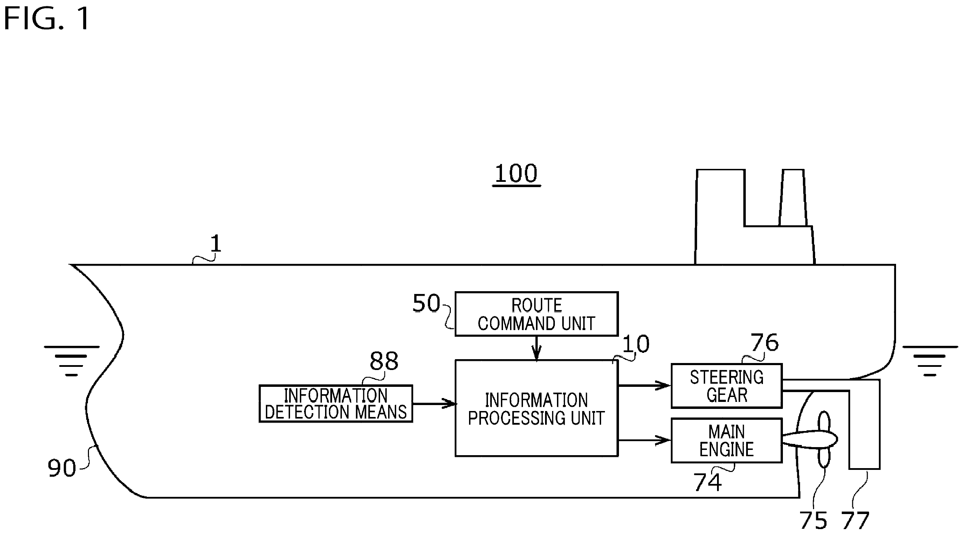

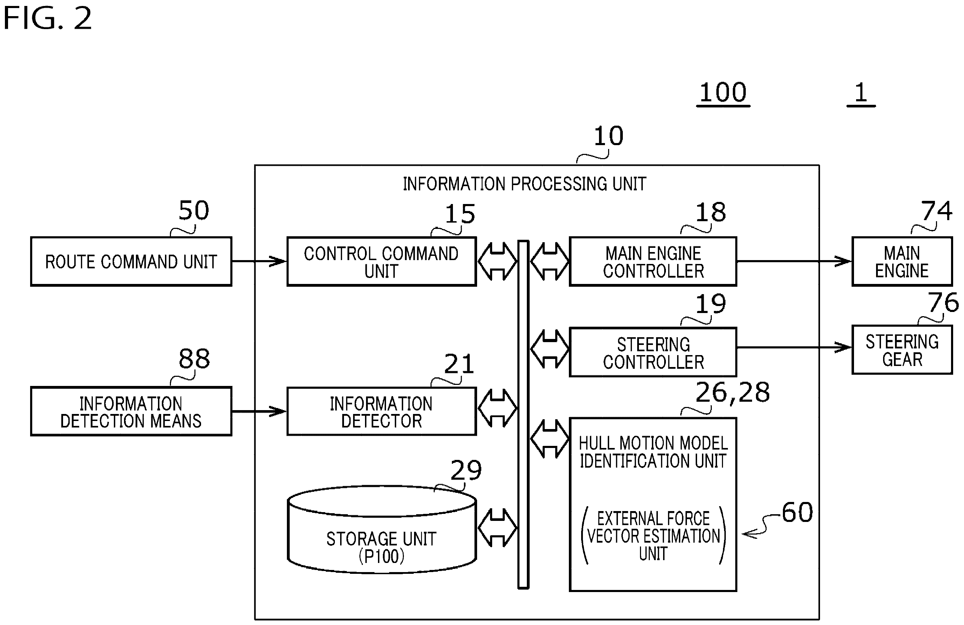

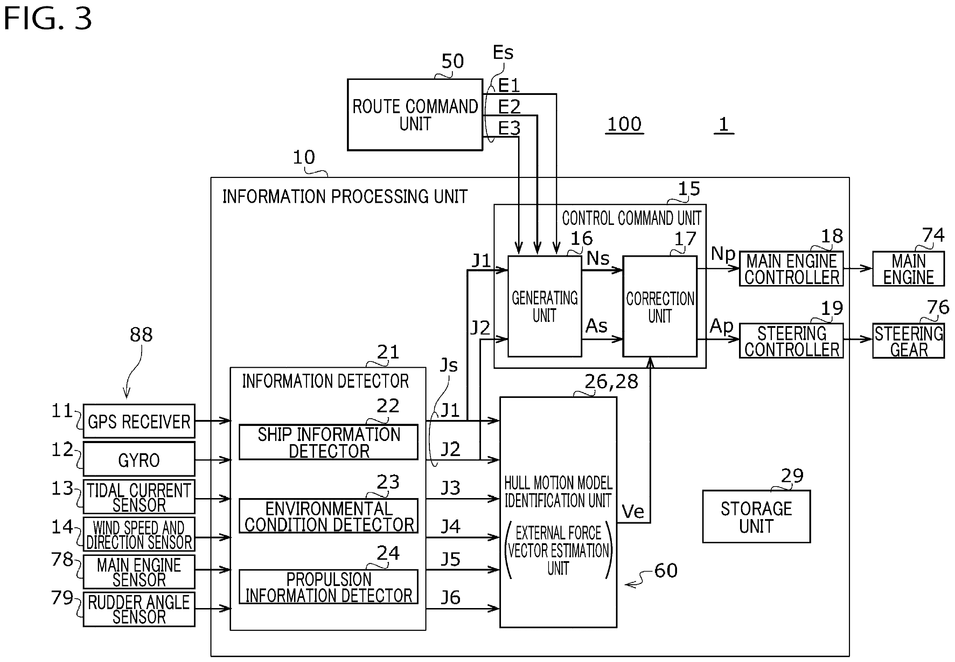

In the following, a ship control system 100 according to the first embodiment of the present invention will be described with reference to FIGS 1-6. FIG. 1 schematically illustrates a ship 1 to which the ship control system 100 according to the first embodiment is applied. FIG. 2 is a schematic block diagram of the ship control system 100. FIG. 3 shows a flow of information in the ship control system 100.

Each block shown in the block diagrams of FIGS. 2 and 3 can be implemented by an element, such as a processor, a CPU, or memory of a computer, an electronic circuit, or a mechanism in terms of hardware, and by a computer program or the like in terms of software. FIGS. 2 and 3 illustrate functional blocks implemented by coordination of those components. Therefore, it will be understood by those skilled in the art that these functional blocks may be implemented in a variety of forms by combinations of hardware and software.

In the embodiment, the ship 1 includes a hull 90, an information detection means 88, an information processing unit 10, a route command unit 50, a main engine 74, and a steering gear 76. The ship control system 100 is provided in the ship 1. The main engine 74 is an engine that propels the ship 1 and rotates a propeller 75 to impart propulsion to the hull 90. The main engine 74 has only to be capable of propelling the hull 90 and is a diesel engine in this example. The main engine 74 consumes an amount of fuel corresponding to the rotational frequency and torque of the main engine 74 in order to operate the main engine 74. The main engine 74 may be provided with a governor, not illustrated, that fine-tunes the fuel input in order to suppress fluctuations in rotational speed in response to load changes in the main engine 74.

The steering gear 76 is a power steering mechanism that rotates a rudder 77 provided on the hull to turn the ship 1. The steering gear 76 changes the rudder angle using power from a power source, such as an electric motor.

The information detection means 88 includes a GPS receiver 11, a gyro 12, a tidal current sensor 13, a wind speed and direction sensor 14, a main engine sensor 78, and a rudder angle sensor 79.

The GPS receiver 11 calculates the current position of the receiver using satellite radio waves and provides the calculated current position as the actual ship position to an information detector 21 of the information processing unit 10. The GPS receiver 11 has only to be capable of calculating the current position of the receiver using satellite radio waves and is not limited to any particular system. The GPS receiver 11 of the embodiment is a global positioning system that receives positioning signals from several satellites in the sky among multiple satellites and calculates the current position of the receiver. The gyro 12 acquires the attitude of the ship 1, identifies the actual bow direction of the ship 1 from the acquired attitude, and provides the actual bow direction thus identified to the information detector 21 of the information processing unit 10.

The tidal current sensor 13 is a device capable of measuring tidal currents affecting the ship 1 and provides the measured tidal currents to an environmental condition detector 23. The wind speed and direction sensor 14 is a device capable of measuring the wind direction and the wind speed affecting the ship 1 and provides the measured wind direction and wind speed to the environmental condition detector 23 of the information processing unit 10.

The main engine sensor 78 acquires the actual rotational frequency and the shaft horsepower of the main engine 74 and provides the actual rotational frequency and shaft horsepower thus acquired to a propulsion information detector 24 of the information processing unit 10. The shaft horsepower of the main engine 74 can be measured by a shaft horsepower meter provided on the propeller shaft. The rudder angle sensor 79 acquires the actual rudder angle of the rudder 77 from the steering gear 76 and provides the actual rudder angle thus acquired to the propulsion information detector 24 of the information processing unit 10.

The route command unit 50 outputs, based on a navigation plan, a route command Es that includes a target ship position E1 and a target bow direction E2 of the ship 1. The route command unit 50 in this example generates the target ship position E1, target bow direction E2, and a target arrival time E3 of the ship 1 and provides them to a control command unit 15 of the information processing unit 10.

The information processing unit 10 includes the information detector 21, the control command unit 15, a main engine controller 18, a steering controller 19, a hull motion model identification unit 26, and a storage unit 29.

The information detector 21 detects ship information Js that includes an actual ship position J1 and an actual bow direction J2 of the ship 1. The information detector 21 in this example includes a ship information detector 22, the environmental condition detector 23, and the propulsion information detector 24. The ship information detector 22 acquires the actual ship position J1 of the ship 1 from the GPS receiver 11 and also acquires the actual bow direction J2 from the gyro 12. The environmental condition detector 23 acquires an external force received by the ship 1 from at least one of wind or a tidal current. The environmental condition detector 23 in this example acquires the speed and direction of a tidal current from the tidal current sensor 13 and also acquires the speed and direction of wind from the wind speed and direction sensor 14, as needed. It is not essential to include the tidal current sensor 13 and the wind speed and direction sensor 14. The propulsion information detector 24 acquires the actual rotational frequency and the shaft horsepower of the main engine 74 from the main engine sensor 78 and also acquires the actual rudder angle of the rudder 77 from the rudder angle sensor 79.

The control command unit 15 controls at least one of the rotational frequency of the main engine 74 or the rudder angle of the ship 1, based on the route command Es, the ship information Js, and an external force vector Ve. The control command unit 15 of the embodiment controls the main engine 74 and the steering gear 76 so that the actual ship position J1 and the actual bow direction J2 of the ship 1 approximate the target ship position E1 and the target bow direction E2 provided from the route command unit 50. The control command unit 15 also corrects the rotational frequency command and the rudder angle command using the external force vector Ve. The control command unit 15 then provides a rotational frequency command Np as corrected to the main engine controller 18 and also provides a rudder angle command Ap as corrected to the steering controller 19.

The storage unit 29 stores time-series data of input information J1 to J6 acquired by the information detector 21, and time-series data of each calculation result of the hull motion model identification unit 26. The storage unit 29 also stores a control program P100 for the ship control system 100.

The hull motion model identification unit 26 (hereinafter, it may be simply referred to as the identification unit 26) estimates the external force vector Ve received by the ship 1, using the ship information Js and a hull motion model related to the hull motions of the ship 1. In other words, the identification unit 26 also functions as an external force vector estimation unit 28 and constitutes an external force vector estimation device 60. The identification unit 26 in this example estimates an external force vector due to a tidal current or wind. The hull motion model is a hull motion model related to acceleration, deceleration, turning, and the like of the ship 1.

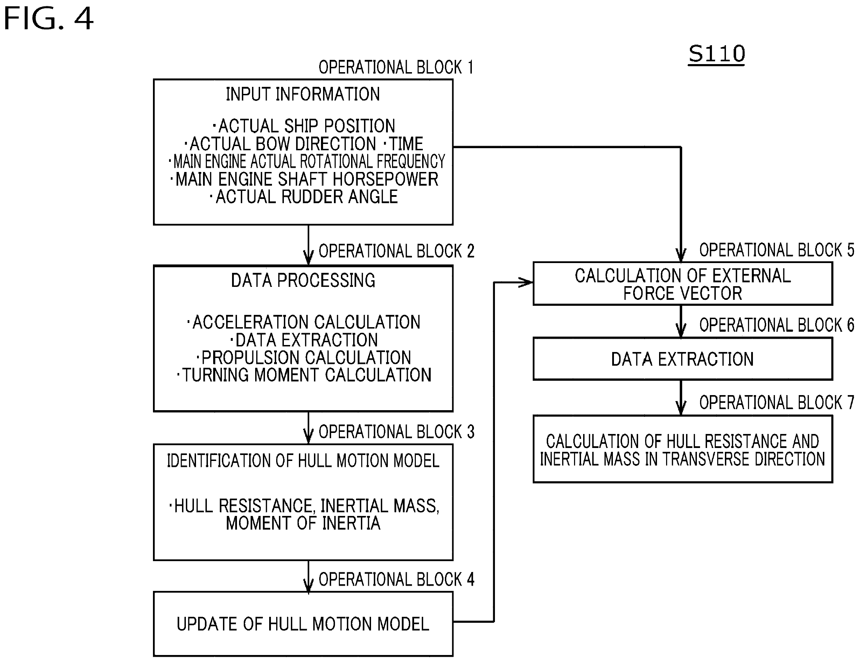

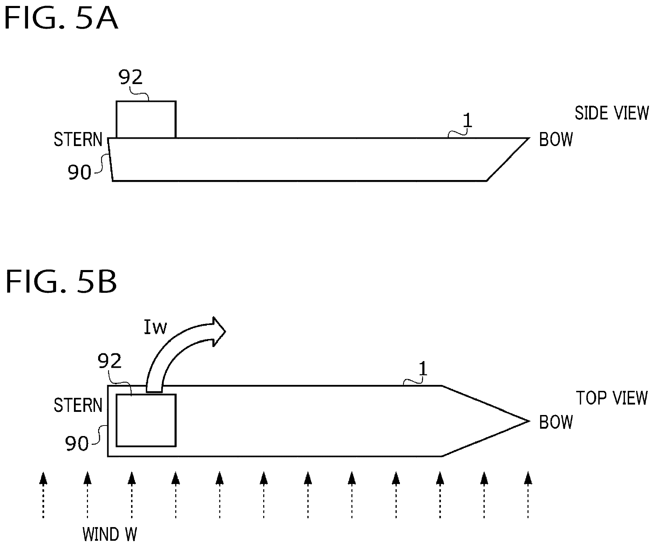

With reference to FIGS. 4, 5A, and 5B, an example of the operation of the identification unit 26 will be described. FIG. 4 is an operational block diagram that shows an operation S110 of the identification unit 26. FIGS. 5A and 5B are illustrative diagrams for an example of a turning moment generated by wind. In the example of FIG. 4, the operation S110 includes multiple operational blocks.

In an input information block (Operational block 1), the identification unit 26 acquires the input information J1 to J6 from the information detector 21. At the time, the identification unit 26 acquires, from the ship information detector 22, the actual ship position J1, the actual bow direction J2, and the actual time. The identification unit 26 also acquires, from the propulsion information detector 24, an actual rotational frequency J4 of the main engine 74, actual shaft horsepower J5 of the main engine 74, and an actual rudder angle J6.

For accurate estimation of the external force vector Ve, the external force vector estimation unit 28 may estimate the external force vector Ve using a measurement result of an external force received by the ship 1 from at least one of wind or a tidal current. More specifically, the identification unit 26 includes a tidal current sensor 13 and the wind speed and direction sensor 14, and the environmental condition detector 23 acquires environmental information J3 related to the tidal currents, wind direction, and wind speed measured by the tidal current sensor 13 and wind speed and direction sensor 14.

In a data processing block (Operational block 2), the identification unit 26 performs data processing using the input information. The identification unit 26 performs the following calculations using the input information J1 to J6 described above.

The external force vector estimation unit 28 estimates the external force vector Ve using the actual ship speed and the actual acceleration or deceleration in a longitudinal direction of the ship 1. The external force vector estimation unit 28 also estimates the external force vector Ve using the actual ship speed and the actual acceleration or deceleration in a direction perpendicular to the longitudinal direction of the ship 1. Accordingly, the identification unit 26 performs the following Calculation 1 and Calculation 2.

Calculation 1 The identification unit 26 calculates the actual ship speed and the actual acceleration or deceleration in a longitudinal direction and the actual ship speed and the actual acceleration or deceleration in a direction perpendicular to the longitudinal direction (hereinafter, referred to as a transverse direction) by temporal differentiation of the actual ship position J1.

Calculation 2 The identification unit 26 calculates the actual turning speed and the actual acceleration or deceleration in the bow direction, by temporal differentiation in the bow direction.

Calculation 3 The identification unit 26 calculates main engine propulsion generated by the main engine 74. For example, the main engine propulsion can be calculated based on the actual rotational frequency J4 of the main engine 74 and the actual shaft horsepower J5 of the main engine 74 acquired from the propulsion information detector 24, and the properties of the propeller 75.

Calculation 4 The identification unit 26 calculates the hull resistance and the inertial mass in a longitudinal direction.

Calculation 5 The identification unit 26 calculates the hull resistance and the inertial mass in a transverse direction (Operational block 7). The hull resistance and the inertial mass in a transverse direction of the ship 1 can be estimated from the data of the actual ship speed and the actual acceleration or deceleration in a longitudinal direction and in a transverse direction at the time when the relative facing angle of the ship 1 to the external force vector has changed before and after a turn of the ship 1. Also, when the ship is equipped with a thruster, the hull resistance and the inertial mass in a transverse direction can be estimated from the data of the actual ship speed and the actual acceleration or deceleration in a longitudinal direction and in a transverse direction at the time when the thruster was operated.

Calculation 6 The identification unit 26 calculates a turning moment generated by the rudder 77.

Using the calculation results of Calculations 1 to 6, the identification unit 26 identifies a hull motion model based on the main engine and rudder (Operational block 3). The hull motion model based on the main engine and rudder can be identified by, for example, machine learning using the input information J1 to J6 and the calculation results of Calculations 1 to 6. Also, when the input information J1 to J6 or a result of Calculations 1 to 6 changes, the identification unit 26 can update the hull motion model (Operational block 4).

Calculation 7 The identification unit 26 calculates the hull resistance and the moment of inertia in the turning direction. The calculation model related to the hull resistance and the moment of inertia in the turning direction in Calculation 7 can be created based on the time-series data of the actual turning speed and the actual acceleration or deceleration in the bow direction in Calculation 2, and the time-series data of the turning moment in Calculation 6.

Calculation 8 The identification unit 26 calculates the external force vector Ve due to a tidal current or wind (Operational block 5). The external force vector Ve due to a tidal current or wind in Calculation 8 can be calculated based on what kind of external force is applied to the ship 1, using the main engine propulsion in Calculation 3, the acceleration or deceleration and the turning acceleration or deceleration of the ship 1 calculated from the turning moment in Calculation 6, and the actual acceleration or deceleration. In the embodiment, the tidal current sensor 13 and the wind speed and direction sensor 14 are mounted, so that an external force due to a tidal current or wind can be calculated based on the measurement results of the tidal current, wind speed, and wind direction acquired via the environmental condition detector 23.

Also, for the external force vector Ve due to a tidal current or wind in Calculation 8, the influences of a tidal current and wind need not be separated for a simplified method; it is sufficient to summate the external forces acting on the ship 1 at each point in time and grasp the vector Ve as the magnitude and direction of a force. In this case, the output of the main engine 74 can be controlled at the time of turning at a way point, with a change in the external force vector assumed in advance. Therefore, unnecessary acceleration or deceleration of the ship will not occur, so that the fuel consumption can be reduced.

Also, for Calculation 8, the influence of a tidal current and the influence of wind may be separated for modeling. For example, from the data of the wind direction and wind speed measured by the wind speed and direction sensor 14, a model of the external force vector due to wind (hereinafter, referred to as the "wind external force vector") can be identified. In this case, the model of the wind external force vector can be identified by extracting data when the influence of tidal currents is small, or by monitoring the external force vector when the wind direction changes.

External forces such as tidal currents and wind fluctuate frequently. A hull motion model identified using data including such frequently fluctuating external forces includes unwanted fluctuations. Such fluctuations can be error factors in control using the external force vector Ve estimated using this hull motion model. Therefore, in the embodiment, the external force vector estimation unit 28 estimates the external force vector Ve using a hull motion model in the state where no external force is applied. In particular, the identification unit 26 creates a hull motion model by extracting the cases in which there is no influence of tide or wind, from a data group of the time-series data of the ship speed and the acceleration or deceleration in a longitudinal direction and in a transverse direction and the propulsion of the main engine 74. In this case, the influence of fluctuations in external forces in the hull motion model can be reduced, so that errors in control using the external force vector Ve can also be reduced.

Also, if there is no influence of tidal currents or wind, the acceleration or deceleration in a longitudinal direction in Calculation 1 is determined by the balance between the main engine propulsion generated by the main engine 74 in Calculation 3 and the hull resistance and the inertial mass in a longitudinal direction in Calculation 4. Accordingly, the data of the actual ship speed and the actual acceleration or deceleration in each direction in Calculation 1 and the time-series data of the actual rotational frequency J4 and the actual shaft horsepower J5 of the main engine 74 in Calculation 3 are stored in the storage unit 29; from the time-series data, data in the case where there is no influence of tidal currents or wind are extracted (Operational block 6), and a calculation model for the hull resistance and the inertial mass in a longitudinal direction in Calculation 4 can be created.

In the embodiment, the tidal current sensor 13 and the wind speed and direction sensor 14 are mounted, so that, while the measurement results of the tidal currents, wind speed, and wind direction acquired via the environmental condition detector 23 are taken into account, a calculation model for the hull resistance and the inertial mass in a longitudinal direction in Calculation 4 can be created based on the time-series data of the actual ship speed and the actual acceleration or deceleration in each direction in Calculation 1 and the time-series data of the actual rotational frequency J4 and the actual shaft horsepower J5 of the main engine 74 in Calculation 3. In this case, since the frequency of creating the calculation model of Calculation 4 increases, changes in tidal current and wind conditions can be grasped more promptly, and improvement in accuracy of the calculation model of Calculation 4 can also be expected.

Furthermore, through synthesis using the wind external force vector and the total external force vector Ve, the external force vector due to a tidal current (hereinafter, referred to as the tidal current external force vector) can be separated and modeled.

The wind external force vector and the tidal current external force vector may generate a turning moment on the ship 1. With reference to FIGS. 5A and 5B, an example of a turning moment generated by the wind external force vector will be described. FIGS. 5A and 5B are illustrative diagrams for an example of a turning moment generated by wind. FIG. 5A is a schematic diagram of the ship 1 viewed from a side, and FIG. 5B is a schematic diagram of the ship 1 viewed from the top. The ship 1 includes a shipboard structure 92 protruding upward on the hull 90, on the side closer to the stern.

For example, when wind strikes the shipboard structure 92, a turning moment is generated by the wind (hereinafter, referred to as a wind turning moment Iw) on the ship 1 as indicated by the arrow, depending on the relative angle at which the wind strikes. In the example of FIGS. 5A and 5B, since the shipboard structure 92 is disposed closer to the stern side, the stern side is strongly pushed by the wind, so that a clockwise moment is generated on the ship 1 when viewed from the top. The wind turning moment Iw can be expressed by Equation 1, with Fw representing the magnitude of the wind external force vector, and $\theta$w representing the relative facing angle between the wind and the ship 1.

$$Iw = f(Fw, \theta w) \qquad (Equation\ 1)$$

Similarly to the wind turning moment, a turning moment generated by a tidal current can also be considered. By separating the external force vector Ve into a tidal current component and a wind component and also considering the turning moment, the influence of external forces can be grasped with higher accuracy. The external force vector Ve thus obtained is provided to the control command unit 15 and used therein to generate command values Np and Ap.

The control command unit 15 formulates a short-term route plan from the actual ship position J1 and actual bow direction J2, with respect to the target ship position E1, target bow direction E2, and target arrival time E3 input from the route command unit 50. In the short-term route plan, an estimated ship position and an estimated bow direction after a small period of time are defined and updated sequentially.

As shown in FIG. 3, the control command unit 15 includes a generating unit 16 and a correction unit 17. The generating unit 16 generates a basic rotational frequency command Ns for controlling the main engine 74 and also generates a basic rudder angle command As for controlling the steering gear 76 so that the target ship position and the target bow direction are achieved after a small period of time. Based on the influence of the external force vector Ve on a ship position change or a bow direction change, the correction unit 17 corrects the basic rotational frequency command Ns and the basic rudder angle command As, provides the rotational frequency command Np as a correction result to the main engine controller 18, and also provides the rudder angle command Ap as a correction result to the steering controller 19.

As a result, since the rotational frequency command for the main engine 74 and the rudder angle command are corrected using the external force vector Ve, errors in control of the position or attitude of the ship 1 can be reduced. Also, as described previously, since the main engine 74 and the steering gear 76 are controlled during a turn while a change in the relative facing angle with an external force after the turn at a way point is considered, unnecessary changes in ship speed can be reduced and hence the fuel consumption can also be reduced.

The above is a description of the first embodiment.

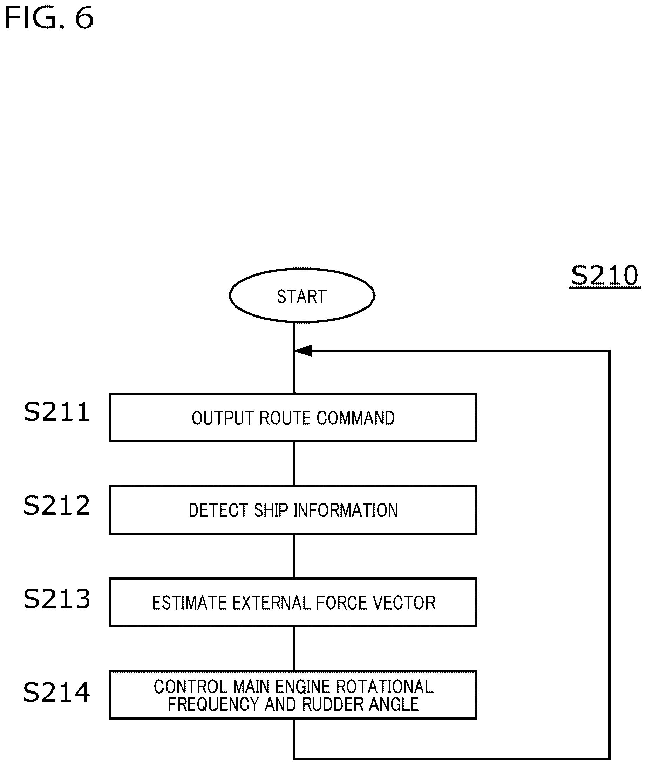

There will now be described second and third embodiments of the present invention with reference to FIG. 6. FIG. 6 is a flowchart that shows a control method for the ship control system according to the second embodiment and is applicable to a control program of the third embodiment. In the drawings and description of the second and third embodiments, like reference characters denote like or corresponding constituting elements and members in the first embodiment. Repetitive description already provided in the first embodiment will be omitted as appropriate, and configurations different from those in the first embodiment will be intensively described.

Second Embodiment

The second embodiment of the present invention relates to a control method S210 for the ship control system 100. This method S210 includes: outputting the route command Es including the target ship position E1 and the target bow direction E2 of the ship 1 (S211); detecting the ship information Js including the actual ship position J1 and the actual bow direction J2 of the ship 1 (S212); estimating the external force vector Ve received by the ship 1, using the ship information Js and a hull motion model related to the hull motions of the ship 1 (S213); and controlling at least one of the rotational frequency of the main engine or the rudder angle of the ship 1, based on the route command Es, the ship information Js, and the external force vector Ve (S214).

The second embodiment provides functions and effects similar to those of the first embodiment.

Third Embodiment

The third embodiment of the present invention relates to a control program P100 (computer program) for the ship control system 100. This program P100 causes a computer to perform: outputting the route command Es including the target ship position E1 and the target bow direction E2 of the ship 1 (S211); detecting the ship information Js including the actual ship position J1 and the actual bow direction J2 of the ship 1 (S212); estimating the external force vector Ve received by the ship 1, using the ship information Js and a hull motion model related to the hull motions of the ship 1 (S213); and controlling at least one of the rotational frequency of the main engine or the rudder angle of the ship 1, based on the route command Es, the ship information Js, and the external force vector Ve (S214).

These functions of the program P100 may be installed as an application program provided with multiple modules corresponding to functional blocks in the information processing unit 10, on a storage (e.g., the storage unit 29) of the information processing unit 10. The program P100 may be read into the main memory of a processor (e.g., CPU) of a computer incorporated in the information processing unit 10 and executed.

The third embodiment provides functions and effects similar to those of the first embodiment.

Exemplary embodiments of the present invention have been described in detail. Each of the abovementioned embodiments merely describes a specific example for carrying out the present invention. The embodiments are not intended to limit the technical scope of the present invention, and various design modifications, including changes, addition, and deletion of constituting elements, may be made to the embodiments without departing from the spirit of the invention defined in the claims. In the aforementioned embodiments, matters to which design modifications may be made are described with the expression of "of the embodiment", "in the embodiment", or the like. However, it is not unallowable to make a design modification to a matter without such expression.

Modifications

In the following, modifications will be described. In the drawings and description of the modifications, like reference characters denote like or corresponding constituting elements and members in the embodiments. Repetitive description already provided in the embodiments will be omitted as appropriate, and configurations different from those in the embodiments will be intensively described.

Although an embodiment describes an example in which the external force vector Ve is used without being subjected to any special processing, the present invention is not limited thereto. For example, the external force vector Ve may be subjected to averaging processing and used, or the high frequency component of the external force vector Ve may be filtered and used. In this case, when the external force vector changes frequently due to signal noise or marine conditions, the influences thereof can be made smaller.

Although an embodiment describes an example in which the processing of generating and updating the hull motion model is performed by a device on the ship 1, the present invention is not limited thereto. For example, the ship control system may include a communication means that can communicate with the outside, and, via the communication means, the external force vector estimation unit may perform part or all of the processing of generating or updating the hull motion model using a device outside the ship. The device outside the ship may be a land-based information processing system, for example. Since the identification of a hull motion model requires a large amount of computing power, by providing part or all of the computing power outside, the processing power of the device on the ship can be reduced, which is advantageous in terms of cost.

Although an embodiment describes an example in which the external force vector estimation unit 28 estimates the external force vector Ve using a tidal current and wind as external forces, the present invention is not limited thereto. For example, in addition thereto, the external force vector estimation unit may also use a wave (the significant wave height, a swell, and the like) as an external force to estimate the external force vector. In this case, as a method for quantitatively measuring waves, a wave height meter or a wave gauge may be provided on the ship.

Although an embodiment describes an example in which the influence of a tidal current and the influence of wind are separated based on the detection results from the tidal current sensor 13 and the wind speed and direction sensor 14, the present invention is not limited thereto. For example, the external force vector estimation unit may use frequency analysis on the time-series data of the external force vector to separate at least one component of wind or a tidal current. In this case, a different coefficient can be multiplied for each separated component of wind and a tidal current. Also, the influence of a turning moment due to wind can be grasped.

Although an embodiment describes an example in which the actual ship speed is acquired by differentiating a change in the actual ship position of the ship 1 with respect to time, the present invention is not limited thereto. For example, a ship speed sensor for detecting the actual ship speed of a ship may be provided, and the actual ship speed may be acquired using the detection result of the ship speed sensor.

Although an embodiment describes an example in which the main engine 74 rotates the propeller 75 to obtain propulsion, the present invention is not limited thereto. The mechanism for obtaining propulsion has only to be capable of propelling the ship and may be, for example, a configuration in which gas or the like is discharged based on the rotation of the main engine 74, and propulsion is obtained by means of the reaction force of the gas or the like.

Although an embodiment describes an example in which the main engine 74 is a diesel engine, the present invention is not limited thereto. For example, the main engine may be an internal combustion engine other than a diesel engine, or an external combustion engine.

The abovementioned modifications provide functions and effects similar to those of the embodiments.

Optional combinations of the aforementioned embodiments and modifications may also be practiced as additional embodiments of the present invention. Such an additional embodiment made by combination has the effect of each of the combined embodiments and modifications.

**Claims**

1. A ship control system (100), comprising:

   a route command unit (50) that outputs a route command (Es) including a target ship position and a target bow direction of a ship (1);
   an information detector (21) that detects ship information (Js) including an actual ship position and an actual bow direction of the ship (1);
   an external force vector estimation unit (28) that estimates an external force vector (Ve) received by the ship (1), using the ship information (Js) and a hull motion model related to a hull motion of the ship (1); and
   a control command unit (15) that controls both rotational frequency of a main engine and a rudder angle of the ship (1), based on the route command (Es), the ship information (Js), and the external force vector (Ve).

2. The ship control system (100) according to claim 1, wherein the external force vector estimation unit (28) estimates the external force vector (Ve) using a hull motion model in the state where no external force is applied.

3. The ship control system (100) according to claim 2, wherein the external force vector estimation unit (28) estimates an external force vector (Ve) using an actual ship speed and actual acceleration or deceleration in a longitudinal direction of the ship (1).

4. The ship control system (100) according to claim 2, wherein the external force vector estimation unit (28) estimates an external force vector (Ve) using an actual ship speed and actual acceleration or deceleration in a direction perpendicular to a longitudinal direction of the ship (1).

5. The ship control system (100) according to claim 1, wherein the external force vector (Ve) is estimated using a measurement result of an external force received by the ship (1) from at least one of wind or a tidal current.

6. The ship control system (100) according to claim 1, wherein the external force vector estimation unit (28) uses frequency analysis on time-series data of an external force vector (Ve) to separate at least one component of wind or a tidal current.

7. The ship control system (100) according to claim 1, wherein the external force vector estimation unit (28) performs part or all of processing of generating or updating the hull motion model, using a device outside the ship (1) via a communication means.

8. An external force vector estimation device (60), comprising an external force vector estimation unit (28) that estimates, using ship information (Js) including an actual ship position and an actual bow direction of a ship (1) and a hull motion model related to a hull motion of the ship (1), an external force vector (Ve) received by the ship (1).

9. A control method for a ship control system (100), the control method comprising:

   outputting a route command (Es) including a target ship position and a target bow direction of a ship (1);
   detecting ship information (Js) including an actual ship position and an actual bow direction of the ship (1);
   estimating an external force vector (Ve) received by the ship (1), using the ship information (Js) and a hull motion model related to a hull motion of the ship (1); and
   controlling both rotational frequency of a main engine and a rudder angle of the ship (1), based on the route command (Es), the ship information (Js), and the external force vector (Ve).

**10.** A control program (P100) for a ship control system (100), the control program causing a computer to perform:

outputting a route command (Es) including a target ship position and a target bow direction of a ship (1);

detecting ship information (Js) including an actual ship position and an actual bow direction of the ship (1);

estimating an external force vector (Ve) received by the ship (1), using the ship information (Js) and a hull motion model related to a hull motion of the ship (1); and

controlling both rotational frequency of a main engine and a rudder angle of the ship (1), based on the route command (Es), the ship information (Js), and the external force vector (Ve).

FIG. 1

100

1

50 ROUTE COMMAND UNIT

10

88 INFORMATION DETECTION MEANS

INFORMATION PROCESSING UNIT

76 STEERING GEAR

74 MAIN ENGINE

90

75 77

EP 4 369 139 A1

FIG. 2

EP 4 369 139 A1

FIG. 3

EP 4 369 139 A1

# FIG. 4

S110

**OPERATIONAL BLOCK 1**

INPUT INFORMATION

· ACTUAL SHIP POSITION
· ACTUAL BOW DIRECTION · TIME
· MAIN ENGINE ACTUAL ROTATIONAL FREQUENCY
· MAIN ENGINE SHAFT HORSEPOWER
· ACTUAL RUDDER ANGLE

**OPERATIONAL BLOCK 2**

DATA PROCESSING

· ACCELERATION CALCULATION
· DATA EXTRACTION
· PROPULSION CALCULATION
· TURNING MOMENT CALCULATION

**OPERATIONAL BLOCK 3**

IDENTIFICATION OF HULL MOTION MODEL

· HULL RESISTANCE, INERTIAL MASS, MOMENT OF INERTIA

**OPERATIONAL BLOCK 4**

UPDATE OF HULL MOTION MODEL

**OPERATIONAL BLOCK 5**

CALCULATION OF EXTERNAL FORCE VECTOR

**OPERATIONAL BLOCK 6**

DATA EXTRACTION

**OPERATIONAL BLOCK 7**

CALCULATION OF HULL RESISTANCE AND INERTIAL MASS IN TRANSVERSE DIRECTION

EP 4 369 139 A1

FIG. 5A

FIG. 5B

FIG. 6

S210

```
          ┌─────────┐
          │  START  │
          └─────────┘
               │
               ▼◄──────────────────────┐
  S211  ┌─────────────────────────┐    │
        │   OUTPUT ROUTE COMMAND  │    │
        └─────────────────────────┘    │
               │                        │
  S212  ┌─────────────────────────┐    │
        │  DETECT SHIP INFORMATION│    │
        └─────────────────────────┘    │
               │                        │
  S213  ┌─────────────────────────┐    │
        │ ESTIMATE EXTERNAL FORCE │    │
        │         VECTOR          │    │
        └─────────────────────────┘    │
               │                        │
  S214  ┌─────────────────────────┐    │
        │ CONTROL MAIN ENGINE     │    │
        │ ROTATIONAL FREQUENCY    │    │
        │ AND RUDDER ANGLE        │    │
        └─────────────────────────┘    │
               │                        │
               └────────────────────────┘
```

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/259489 A1 (HAMAMATSU MASANORI [JP] ET AL) 11 October 2012 (2012-10-11) * paragraphs [0068], [0070], [0076], [0080]; figures 1-3 * ----- | 1-10 | INV. G05D1/606 |
| | | | TECHNICAL FIELDS SEARCHED (IPC) |
| | | | G05D B63B G05B |

The present search report has been drawn up for all claims

| Place of search | Date of completion of the search | Examiner |
|---|---|---|
| Munich | 4 April 2024 | Gundlach, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 5820

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2024

| Patent document cited in search report | Publication date | Patent family member(s) | Publication date |
|---|---|---|---|
| US 2012259489 A1 | 11-10-2012 | EP 2498056 A1 | 12-09-2012 |
| | | JP 5276720 B2 | 28-08-2013 |
| | | JP WO2011055512 A1 | 21-03-2013 |
| | | US 2012259489 A1 | 11-10-2012 |
| | | WO 2011055512 A1 | 12-05-2011 |

For more details about this annex : see Official Journal of the European Patent Office, No. 12/82

**REFERENCES CITED IN THE DESCRIPTION**

**Patent documents cited in the description**

- JP 58082311 A